# EUROPEAN PATENT SPECIFICATION

(11) **EP 0 866 771 B1**
(45) Date of publication and mention of the grant of the patent: **08.09.1999**
(21) Application number: 96941112.3
(22) Date of filing: 03.12.1996
(51) Int. Cl.: C01G 49/12, C21C 7/00, B01J 2/28

(54) **IRON SULPHIDE COMPOSITIONS**
EISENSULFID ZUSAMMENSETZUNGEN
COMPOSITIONS DE SULFURE DE FER

(30) Priority: 15.12.1995 GB 9525635; 27.02.1996 GB 9604054
(43) Date of publication of application: 30.09.1998
(73) Proprietor: Laporte Industries Limited, London W1H 9AB (GB)
(72) Inventor: MOBBS, David, Barry, Handforth Cheshire SK9 3NN (GB); SWANN, Kevin, Callands Warrington Cheshire WA5 5UA (GB); GRIFFIN, Patrick, Alphonsus, Whittington Worcester WR5 2LN (GB); CARDWELL, Paul, Alyn, Great Sankey Warrington Cheshire WA5 1RY (GB)
(74) Representative: ffrench-Lynch, Cecil
(86) International application number: GB9602981
(87) International publication number: WO9722555

(56) References cited:
- US-A- 3 536 475
- US-A- 3 849 125
- DATABASE WPI Section Ch, Week 7817 Derwent Publications Ltd., London, GB; Class M22, AN 78-31286A XP002027569 & JP 53 029 258 A (KOBE STEEL KK) , 18 March 1978
- CHEMICAL ABSTRACTS, vol. 97, no. 2, 12 July 1982 Columbus, Ohio, US; abstract no. 9800, SARYCHEV: XP002027568 & STAL', vol. 1, 1982, page 26

## Description

This invention relates to iron sulphide compositions for metallurgical use and to a process for their production.

Raw pig iron used in the production of steel may contain sulphur which may have been introduced into the blast furnace charge as a contaminant of coke. Some of this sulphur may form hydrogen sulphide and carbonyl sulphide gases which may come off from the charge or may react with calcium oxide and ferrous oxide to form the corresponding sulphides. The ferrous sulphide so formed may react with further calcium oxide to form further calcium sulphide which may be removed with the slag. The extent and balance of these mechanisms depends on the temperature and precise composition of the furnace charge but in at least some pig iron products there may be a relatively low content of sulphur. In the production of steel from pig iron the oxidising stage, designed mainly to reduce the carbon content of the iron, also acts to remove other minor constituents and, at this stage sulphur may come off as sulphur dioxide.

The effect of a content of sulphur on steel may be detrimental in reducing the strength and impact resistance of the product. The sulphur tends to separate out in combined form at grain boundaries and this may lead to the formation of zones or lines of weakness in the steel. However, a limited content of sulphur may be beneficial in that it tends to improve the machinability of the steel. Commercial steels, therefore, generally have a low and carefully controlled content of sulphur of at least about 0.005% and within a normal maximum content of about 0.06% or, more usually, about 0.04% by weight. Where a relatively pure pig iron is used as the raw material for steel production there may be a requirement for the precisely controlled addition of a small proportion of sulphur to the molten steel.

Iron pyrites may be used as a source of sulphur in metallurgical processes. Some grades of iron pyrites, such as the finely divided flotation grade of this material, or fines of other grades, may be difficult to handle or to process. Irrespective of grade, iron pyrites is electrically conductive and slightly magnetic and may be subject to severe problems of dusting. It may be difficult to distribute homogeneously throughout a charge of molten metal.

The present invention has as an object to facilitate the use of iron pyrites as a sulphur carrier in metallurgy.

According to a first aspect the invention provides an iron disulphide composition for metallurgical use, for example for addition to a melt of a ferrous metal, characterised in that the composition is in the form of pressure-compacted aggregates of flotation grade iron pyrites or iron pyrites fines the aggregates having individual densities of 4.0 to 5.5 g/cc.

According to a second aspect of the invention the iron disulphide compositions thereof, as provided last above, comprise iron pyrites but have a sulphur content departing from that of the iron pyrites and determinable in a range of from about 40% to 90% by weight, calculated as S by reason of a content of ferrous sulphide and/or elemental sulphur.

According to further aspects the present invention provides a low energy process for the production of the aforesaid compositions and metallurgical processes wherein the aforesaid compositions are included in a melt of a ferrous metal.

The compacted aggregates of the invention, i.e. agglomerates, may be, without limitation thereto, briquettes or pellets. Such aggregates suitably have a largest dimension of from about 1 to about 12 centimeters, more usually from about 2 to about 8 centimeters and may be of approximately spherical, ovoid, rhomb-shaped or other convenient shape or may be formed into a sheet which may be cut or broken to the desired size. The iron pyrites particles of which these aggregates are made, or other particles included therein, may comprise at least 50%, or up to 100%, by weight of particles of at least 0.001 mm, preferably at least 0.01 mm in diameter and up to 0.5 cm in diameter. Preferably the iron pyrites or other particles comprise at least 80% by weight smaller than 0.1 mm. The iron pyrites or other particles may comprise larger particles than this subject, of course, to being sufficiently smaller in diameter than the required aggregates to enable those aggregates to be formed, as a practical matter, by compaction. The iron pyrites may have zinc as a main impurity but this metal is preferably present in less than 0.2% calculated as Zn. The compacted aggregates of the present invention may be readily metered into a steelmaking ladle and mixed into the melt and their density makes them compatible with the melt. They are also susceptible to selection of size, or size distribution, to facilitate dosage control.

The process provided by the invention, for the production of the aggregates also provided by the invention, is characterised in that the flotation grade iron pyrites or iron pyrites fines are mixed with a binder, in that the mixture contains at least 0.1% by weight of water and in that the mixture is pressure formed at a pressure of at least 10³ N/cm², or at least 10⁴ N/cm using roller presses, to give compacted aggregates having individual densities of 4.0 to 5.5 g/cm³.
Aggregation can in theory be achieved in the case of some finely divided materials without the addition of a binder or binders by the utilisation of van der Waals or electrostatic forces or, in the case of some ferromagnetic substances, magnetic forces. In the case of iron pyrites the use of a binder is necessary to enable the compacted aggregates to mix homogeneously with the steel melt and to retain their form during storage or use. Non-pressure aggregating processes, such as of a balling plate or drum, may be feasable for use to produce aggregates but may not give final products having a sufficiently high density for metallurgical use.

Inorganic binders are particularly suitable for use according to the invention. Such binders may be inorganic salts such as the sulphates of the alkaline earth metals, of aluminium or of iron, aluminates, such as the alkaline earth metal aluminates, particularly but without limitation calcium aluminate, calcium oxide or hydroxide, or silicates, such as alkali metal silicates or naturally occurring or synthetic aluminium or magnesium silicates such as mineral clays or synthetic analogues thereof. Calcium aluminate in the form of ciment fondu is particularly suitable. This material has a content of calcium silicate and of iron oxide and it is particularly compatible with pyrites as a binder/lubricant in pressure-briquetting or pelleting processes. Many of the other inorganic binders, for example the silicates, aluminates or clays, also have a lubricating action, which makes them suitable for use in a pressure-forming process, as well as a binding action and may very suitably be used in combination with other binders identified herein as, for example, a combination of an alkaline earth metal aluminate with an alkaline earth metal silicate. Hydraulic materials, such as cements of various kinds, may also be used as inorganic binders. Gypsum is a further example of a suitable binder.

Organic binders are also suitable for use in the practice of the invention. Examples of such binders are the naturally occurring, processed or synthesised and preferably colloidal polysaccharides. Such materials give immediate or fast-acting binding effect and support to the aggregates and may be introduced as finely divided solids and show binding properties under the influence of pressure, temperature and/or moisture. The polysaccharide is preferably a gum for example a seaweed extract, such as an agar or algin, a plant extract, for example tragacanth or karaya, but is, particularly preferably, a seed gum, for example guar, or a microbial gum, for example xanthan and/or a galactomannan. Another particularly preferred polysaccharide binder is starch. Saccharide materials such as molasses may very preferably be used.

Other organic binders suitable for use according to the invention are resin binders capable of curing at the temperatures used in the production of the aggregates of the present invention such as ambient or low super-ambient temperatures or, for example, at from 10°C to 60°C. Formaldehyde resins or other aldehyde resins capable of cure at a temperature of from about 15°C to about 40°C are particularly suitable for use according to the invention. Alternatively, a "hot-cure" resin or hardener may be used, curing at up to 200°C provided the duration of cure is sufficiently short to avoid adverse effects, for example a lignosulphonate. Resin binders tend to have a somewhat delayed effect and may preferably be used in conjunction with a binder having a more immediate effect as identified above.

Other suitable binders in any of the above categories, or mixtures of any of the above binders or other suitable binders, may be used according to the invention.

A binder or binders is preferably present in at least 0.3% by weight of the aggregation mixture or of the final aggregates if different. While the binder may be present in up to 10% or more it is preferred to limit to some extent the organic content of the composition and it is therefore generally preferred that the binder is present in less than 10%, particularly preferably no more than 5% by weight of the composition. If it is nevertheless desired to produce a low sulphur content product from the iron pyrites the above quantities may be exceeded and a binder may be present in up to 20% or more, for example 39.4%, by weight. Without a suitable binder or binder system, or other material having a similar affect, the agglomerates according to the invention may, at least initially, be subject to fracture and may, in some cases, never achieve the required mechanical strength for use in the metallurgical industry.

The pressure-forming step of the invention may suitably be conducted using moulding or roller presses, such as briquetting presses, or extrusion devices such as auger mills. The pressure employed is preferably up to 10⁵ N/cm² or 10⁶ N/cm² or equivalent linear pressures, for example 10⁶ N/cm when using roller presses. There may be some degree of generation of heat due to shear of the particles during compression and this may be beneficial to the binding action of those binders which require certain alterations of their chemical or physical structure such as by cross-linking or curing in the case of the resin binders or by melting or dissolving in the case of polysaccharide binders. In the case of iron pyrites heat evolution due to shear does not provide sufficient assistance to the binder and it is desirable to add heat.

The aggregates according to the invention preferably include ferrous sulphide, or elemental sulphur, or both.

If ferrous sulphide is included in the iron pyrites aggregation mix there may be a degree of increased heat evolution and more effective binding of the final product. This may reduce or eliminate the need to provide an external source of heat. The inclusion of ferrous sulphide in the aggregates of the present invention has the further advantage that, having a lower sulphur content than iron pyrites, it enables aggregates having a high sulphide content but a lower content of sulphur to be produced. A source of sulphur having a content of sulphur of from 40% to 53%, preferably from 40% to 50%, for example very suitably from 40% to 45% by weight, is of interest in steelmaking and is advantageously produced according to this aspect of the invention for example by the use of iron pyrites and ferrous sulphide in a weight ratio of from about 40:60 to about 60:40. Generally, the weight ratio of iron pyrites:ferrous sulphide may be 5:95 to 95:5 or, very suitably, 10:90 to 90:10. The spontaneous heating effect in the presence of ferrous sulphide, or of iron pyrites, is apparently encouraged by the presence of some water or moisture in the mix. Preferably therefore, the aggregation mix of the present invention contains a quantity of water in liquid or vapour form. Preferably the quantity of water is at least 0.1% by weight, for example at least 0.5% by weight of the aggregation mix and/or sufficient to achieve an appreciable heating effect. Preferably the quantity of water is below 10% on the same basis. A suitable quantity of water may be at least 0.75% by weight, and/or up to 8%, of the aggregation mixture. There may in certain circumstances, for example when the material has been stored in contact with damp air, be a proportion of water present absorbed in the iron pyrites or ferrous sulphide. Such water may be present in up to 10% of more, for example in at least 2%. Such water is taken into account in determining the amount of water to be added, if any. Water also plays a part in making the iron pyrites more readily handleable. The quantity of water should preferably be such that a flowable paste is not formed. The formed agglomerates do not normally require to be dried of residual moisture but this is not excluded if required.

If elemental sulphur, for example granular or powdered sulphur, is included in the iron pyrites aggregation mix the aggregates have a correspondingly higher content of sulphur. Elemental sulphur is not preferred as a direct additive to a ferrous metal melt because its low density makes it difficult to incorporate. Elemental sulphur-containing iron pyrites compacted aggregates may be suitable for metallurgical use up to a high overall sulphur content. Such aggregates are therefore also provided according to the present invention. Generally, the weight ratio of iron pyrites:sulphur may be from 5:95 to 95:5 or, very suitably, 10:90 to 90:10. The overall content of sulphur in the aggregates is preferably greater than 54%, particularly preferably at least 60% by weight and, to achieve suitable binding and density, is preferably less than 90%, for example less than 85%, by weight.

The present invention also provides compacted aggregates of iron pyrites containing both ferrous sulphide and elemental sulphur to produce a product having a density and overall sulphur content nearer to that of iron pyrites than in the cases where only one of these additives may be used. This gives valuable flexibility in materials usage.

In the case of either a content of ferrous sulphide or of elemental sulphur the ratio of iron pyrites:ferrous sulphide or elemental sulphur is preferably <75%:>25%, for example, very suitably, <73%:>27%. The ratio of iron pyrites:ferrous sulphide or elemental sulphur is preferably at least 10%:90%. Preferably iron pyrites, ferrous sulphide and/or sulphur is present in the aggregates of the invention in at least 80%, particularly preferably at least 90%, and up to 99% or more, by weight of the final aggregates. The need to use binders may be reduced or eliminated in the presence in the aggregates of ferrous sulphide and/or sulphur. Additives or diluents or other materials may be present in addition to the binder and may be selected according to practice in the art.

The pressure-formed iron pyrites ahhregates of the invention may be fed into the steel ladle and due to the relatively smaller density difference between them and the steel melt, in comparison with particulate forms of iron pyrites, ferrous sulphide and/or sulphur, and mix in easily to give accurate and even dosing of sulphur.

The invention will now be more specifically described by reference to the following non-limiting Example.

### Example 1

The composition of the aggregation mix was as follows:

| | |
|---|---|
| Iron pyrites | 60.6% by weight |
| Water (by wt of pyrites) | 6% to 8% |
| Guar gum | 6.1% by weight |
| Molasses | 15.1% by weight |
| Lignosulphonate | 18.2% by weight |

The mixing and pressure-forming steps were carried out as follows. The iron pyrites, consisting of particles in the 0 to 2 mm diameter range, were placed in a mixer bowl and the water was added and mixed in to give a damp mixture. The guar, and the molasses, were then added and mixed in and, lastly, the lignosulphonate was mixed in. The mixture was passed to a press in which pressure-formed aggregates of about the size of a domestic soap bar were produced at a pressure above 10³ N/cm². The pressure formed-aggregates were oven heated at 180°C to cause crosslinking. The products of these Examples had a density of 4 - 5 g/cm³ and were physically strong and breakage resistant and suitable for use as sulphur sources in steel production.

## Claims

1. An iron disulphide composition for metallurgical use, characterized in that the composition is in the form of pressure-compacted aggregates of flotation grade iron pyrites or iron pyrites fines the aggregates having individual densities of 4.0 to 5.5 g/cc.

2. A composition as claimed in claim 1 wherein the aggregates have a largest dimension of from 1 to 12 centimeters and the iron pyrites powder or iron pyrites fines have a largest dimension, to the extent of at least 50% by weight, of from 0.001 mm to 0.5 cm.

3. A composition as claimed in claim 1 or 2 comprising one or more binders.

4. A composition as claimed in any preceding claim wherein the binder is an organic binder comprising a resin curing at from 10°C to 60°C, a lignosulphonate, a polysaccharide colloidal material, a seed or microbial gum, molasses or a starch.

5. A composition as claimed in any preceding claim wherein the binder is an inorganic binder comprising a hydraulic material, a silicate, an aluminate, a synthetic or mineral clay, calcium hydroxide or gypsum.

6. A composition as claimed in any preceding claim wherein the binder comprises an alkaline earth metal aluminate or a mixture thereof with an alkaline earth metal silicate.

7. A composition as claimed in any one of claims 3 to 6 wherein the binder or binders are present in from 0.3% to 20% of the aggregates.

8. A composition as claimed in any preceding claim also comprising ferrous sulphide and having an overall content of sulphur of at least 40% by weight.

9. A composition as claimed in any preceding claim also comprising elemental sulphur and having an overall content of sulphur of less than 90% by weight.

10. A process for the production of a composition as claimed in any one of claims 1 to 9 the process being characterised in that the flotation grade iron pyrites or iron pyrites fines are mixed with a binder, in that the mixture contains at least 0.1% by weight of water and in that the mixture is pressure-formed at a pressure of at least 10³ N/cm² or at least 10⁴ N/cm using roller presses, to give compacted aggregates having individual densities of 4.0 to 5.5 g/cm³.

11. A process as claimed in claim 10 wherein the mixture contains less than 10% by weight of water.

12. A process as claimed in claim 10 or 11 wherein the mixture is pressure formed at a pressure of up to 10⁶ N/cm² or N/cm respectively.

13. A process as claimed in any one of claims 10 to 12 wherein the binder comprises calcium aluminate.

14. A metallurgical process wherein a composition as claimed in any one of claims 1 to 9 is included in a melt of a ferrous metal to give a content of sulphur in the metal of 0.005% to 0.06% by weight.

## Patentansprüche

1. Eisendisulphid-Zusammensetzung zur metallurgischen Verwendung, dadurch gekennzeichnet, daß die Zusammensetzung in Form von pressverdichteten Aggregaten aus flotationsreinen Eisenpyriten oder Feingut von Eisenpyriten vorliegt, wobei die Aggregate Einzeldichten von 4,0 bis 5,5 g/cm³ haben.

2. Zusammensetzung nach Anspruch 1, wobei die Aggregate eine größte Abmessung von 1 bis 12 cm haben und mindestens 50 Gewichts-% des Pulvers von Eisenpyriten oder des Feinguts von Eisenpyriten eine größte Abmessung von 0,001 mm bis 0,5 cm haben.

3. Zusammensetzung nach Anspruch 1 oder 2, die einen oder mehrere Binder enthält.

4. Zusammensetzung nach einem der vorhergehenden Ansprüche, wobei der Binder ein organischer Binder ist, der ein bei 10°C bis 60°C härtendes Harz, ein Lignosulfonat, ein kolloidales Polysaccharidmaterial, einen Gummi aus Samen oder Mikroben, Molassen oder eine Stärke enthält.

5. Zusammensetzung nach einem der vorhergehenden Ansprüche, wobei der Binder ein anorganischer Binder ist, der ein hydraulisches Material, ein Silicat, ein Aluminat, eine synthetische oder mineralische Tonerde, Calciumhydroxid oder Gips enthält.

6. Zusammensetzung nach einem der vorhergehenden Ansprüche, wobei der Binder ein Erdalkalimetallaluminat oder ein Gemisch daraus mit einem Erdalkalimetallsilikat enthält.

7. Zusammensetzung nach einem der Ansprüche 3 bis 6, wobei der Binder oder die Binder in einer Menge von 0,3% bis 20%, bezogen auf die Aggregate, vorliegt.

8. Zusammensetzung nach einem der vorhergehenden Ansprüche, die ferner Eisen(II)-sulfid enthält und einen Gesamtgehalt an Schwefel von mindestens 40 Gewichts-% hat.

9. Zusammensetzung nach einem der vorhergehenden Ansprüche, die ferner elementaren Schwefel enthält und einen Gesamtgehalt an Schwefel von weniger als 90 Gewichts-% hat.

10. Verfahren zur Herstellung einer Zusammensetzung nach einem der Ansprüche 1 bis 9, wobei das Verfahren dadurch gekennzeichnet ist, daß die flotationsreinen Eisenpyrite oder das Feingut aus Eisenpyriten mit einem Binder vermischt werden/wird, das Gemisch mindestens 0,1 Gewichts-% Wasser enthält und das Gemisch bei einem Druck von mindestens 10³ N/cm² oder mindestens 10⁴ N/cm unter Verwendung von Presswalzen pressverdichtet wird, so daß sich pressverdichtete Aggregate mit Einzeldichten von 4,0 bis 5,5 g/cm³ ergeben.

11. Verfahren nach Anspruch 10, wobei das Gemisch weniger als 10 Gewichts-% Wasser enthält.

12. Verfahren nach Anspruch 10 oder 11, wobei das Gemisch bei einem Druck bis zu 10⁶ N/cm² bzw. N/cm pressverdichtet wird.

13. Verfahren nach einem der Ansprüche 10 bis 12, wobei der Binder Calciumaluminat enthält.

14. Metallurgisches Verfahren, bei dem eine Zusammensetzung nach einem der Ansprüche 1 bis 9 in eine Schmelze eines eisenhaltigen Metalls eingeführt wird, so daß sich ein Gehalt an Schwefel in dem Metall von 0,005 Gewichts-% bis 0,06 Gewichts-% ergibt.

## Revendications

1. Composition à base de disulfure de fer pour une utilisation métallurgique, caractérisée en ce que la composition est sous la forme d'agrégats compactés sous pression de pyrites de fer de qualité pour flottation ou de fines particules de pyrites de fer, les agrégats ayant des masses volumiques individuelles de 4,0 à 5,5 g/cm³.

2. Composition selon la revendication 1, dans laquelle les agrégats ont une plus grande dimension de 1 à 12 cm, et la poudre de pyrites de fer ou les fines particules de pyrites de fer, ont une plus grande dimension, pour au moins 50 % en poids, de 0,001 mm à 0,5 cm.

3. Composition selon la revendication 1 ou 2, comprenant un ou plusieurs liants.

4. Composition selon l'une quelconque des revendications précédentes, dans laquelle le liant est un liant organique comprenant une résine durcissant à 10 °C jusqu'à 60 °C, un lignosulfonate, une matière polysaccharidique colloïdale, une gomme de graine ou microbienne,de la mélasse ou un amidon.

5. Composition selon l'une quelconque des revendications précédentes caractérisée en ce que le liant est un liant minéral comprenant un matériau hydraulique, un silicate, un aluminate, une argile synthétique ou minérale, de l'hydroxyde de calcium ou du gypse.

6. Composition selon l'une quelconque des revendications précédentes, dans laquelle le liant comprend une aluminate de métal alcalinoterreux ou un mélange de celui-ci avec un silicate de métal alcalinoterreux.

7. Composition selon l'une quelconque des revendications 3 à 6, dans laquelle le ou les liants sont présents à raison de 0,3 % à 20 % des agrégats.

8. Composition selon l'une quelconque des revendications précédentes, comprenant également du sulfure ferreux, et ayant une teneur globale en soufre, d'au moins 40 % en poids.

9. Composition selon l'une quelconque des revendications précédentes, comprenant également du soufre élémentaire et ayant une teneur globale en soufre inférieure à 90 % en poids.

10. Procédé de production d'une composition selon l'une quelconque des revendications 1 à 9,caractérisé en ce que les pyrites de fer de qualité pour flottation ou les fines particules de pyrites de fer, sont mélangées avec liant, en ce que le mélange contient au moins 0,1 % en poids d'eau, et en ce que le mélange est façonné sous pression, à une pression d'au moins 10³ N/cm² ou d'au moins 10⁴ N/cm en utilisant des presses à cylindres, pour obtenir des agrégats compactés ayant des masses volumiques individuelles de 4,0 à 5,5 g/cm³.

11. Procédé selon la revendication 10, dans lequel le mélange contient moins de 10 % en poids d'eau.

12. Procédé selon la revendication 10 ou 11, dans lequel le mélange est façonné sous pression, à une pression allant respectivement jusqu'à 10⁶ N/cm² ou N/cm.

13. Procédé selon l'une quelconque des revendications 10 à 12, dans lequel le liant comprend de l'aluminate de calcium.

14. Procédé métallurgique dans lequel une composition selon l'une quelconque des revendications 1 à 9, est incorporée dans une masse fondue d'un métal ferreux, pour obtenir une teneur en soufre dans le métal, de 0,005 % à 0,06 % en poids.
